# EUROPEAN PATENT APPLICATION

(11) **EP 2 034 336 A1**
(43) Date of publication of application: **11.03.2009**
(21) Application number: 07253542.0
(22) Date of filing: 07.09.2007
(51) Int. Cl.: G01V 1/22

(54) **Data transmission system**

(71) Applicant: Vibration Technology Limited, Larbert FK5 4RU (GB)
(72) Inventor: Wilcox, Steven William, Kinross KY13 8FG (GB)
(74) Representative: Cooper, John

(57) **Abstract**

A data transmission system, particularly for use in seismic data acquisition, transmits digital signals from remote units (10) to a central control unit (12) via a backbone network (16) and root nodes (14). Data is transmitted wirelessly between the remote units (10) and the root nodes (14) by means of each remote unit (10) having two transceivers, one of which acts as a client and the other as an access point. The remote units (10) transmit metrics which enable the adaptive formation of a mesh-like network.

## Description

This invention relates to wireless data transmission system and is particularly, but not exclusively, applicable to land seismic surveying systems.

In land seismic surveys, an array of geophones is used to detect reflections from subsurface earth formations of acoustic signals which are generated at, or near to, the surface of the earth. Geophysicists planning seismic surveys determine the positions where geophones are to be placed during a survey, normally on the earth's surface but commonly also in boreholes. These positions are known as stations, and one or more interconnected geophones may be placed at these stations. Such a collection of interconnected geophones is referred to as a geophone group, even if it consists of a single geophone.

The output of a geophone group is an analogue signal which is required to be digitized by a high-precision 24-bit analogue-to-digital converter to facilitate the high fidelity recording of the signal. As the geophone groups are typically distributed over a wide geographical area, it has become a common technique to deploy digitizer units containing between one and eight analogue-to-digital converters across the survey area, and to interconnect these digitizing units using cable to create a data transport network to transfer the digitized geophone signals to the data recorder.

Wireless systems have also come into use, as has the use of optical fibre cable to handle high data transfer rates. These developments, together with improved data processing, have allowed the use of larger seismic spreads and higher resolutions.

In our US 6219620 (= EP 0934538) there is described a seismic acquisition system in which the terrain is divided into cells, and digitizer units within each cell communicate with a cell controller by wireless techniques. The cell controllers then communicate with a central control unit by wireless or fibre optic cable. Such an arrangement greatly reduces the amount of work required to set up the seismic spread, and also allows a large amount of data to be processed virtually in real time.

The present invention seeks to further enhance the deployment efficiency of the system by means of a self-configuring and self-adapting wireless data networking system.

The invention provides a data transmission system for transmitting digital data between a multiplicity of remote stations and a central control unit. At the central control unit, the interface to the data transmission system is via one or more root nodes. Each of the remote stations comprises a first transceiver, a second transceiver and a control means; the first transceiver being operable as a wireless client, capable of communicating with an access point; and the second transceiver being operable as an access point to which the wireless client transceivers of other remote stations may connect. The controller within the remote station provides a means of routing data between the two transceivers.

From another aspect the invention provides a seismic survey system comprising a data transmission system in accordance with the preceding paragraph and in which each of the remote stations is a remote acquisition unit connected to one or more geophones to form a geophone group.

A further aspect of the invention provides a remote acquisition unit for use in seismic surveying comprising a remote station as defined above, input means for connection to one or more geophones, and means for storing and forwarding seismic data received from said geophone(s).

Preferred features and advantages of the invention will be apparent from the claims and from the following description.

An embodiment of the invention will now be described, by way of example only, with reference to the drawings, in which:
Fig. 1 is a schematic overview of a seismic surveying system;
Fig. 2 is a block diagram illustrating one remote acquisition unit in the system of Fig. 1;
Fig. 3 is a flow chart of a process performed by the remote acquisition unit in establishing a communication route.

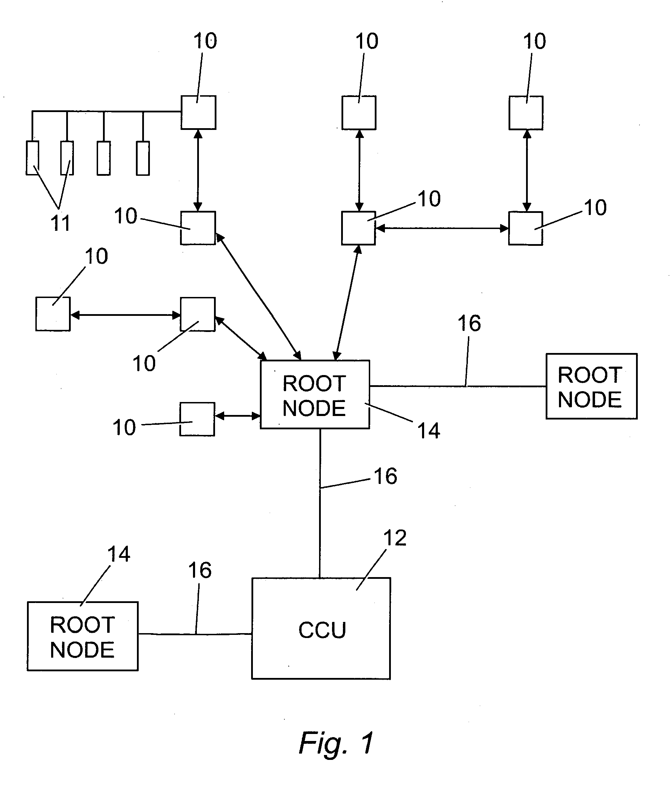

Referring to Fig. 1, a seismic survey system comprises a number of remote acquisition units (RAUs) 10 distributed across a survey terrain. Each RAU 10 is connected to one or more geophones 11 forming a geophone group. It will be appreciated that Fig. 1 is schematic and that in practice several thousand RAUs may be used.

Seismic data from the geophones is ultimately transferred to a central control unit (CCU) 12. In the present embodiment, data is transferred from each RAU 10 by a wireless system to be described to a root node 14, and the root nodes 14 communicate with the CCU 12. Each root node 14 takes the form of one or more wireless access points which are connected to the CCU 12 by a high speed data network 16 which will typically be fast Ethernet or Gigabit Ethernet which may use copper, fibre optic or wireless as transmission medium.

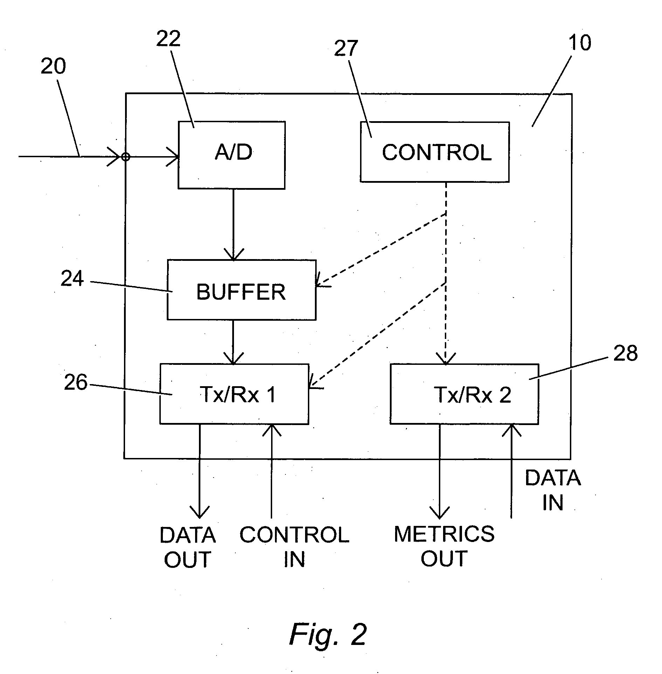

Turning to Fig. 2, each RAU 10 has an input 20 for receiving geophone signals, an analog-to-digital converter 22 (not required if the geophone signals are digital), and a memory 24 for temporarily storing the digital signals. The RAU 10 also comprises two radio transceivers, namely a first transceiver 26 referred to herein as an "upstream" transceiver, and a second transceiver 28 referred to herein as a "downstream" transceiver, and a control circuit 27.

The upstream transceiver 26 operates as a wireless client while the downstream transceiver 28 operates as an access point, as will be described. Each of the root nodes 14 includes a wireless transceiver operating as an access point.

Each of the downstream wireless transceivers 28 and root node 14 wireless transceivers operating as an access point may be configured to broadcast a beacon signal. This beacon signal contains a parameter indicating the logical distance of the node from the CCU. The root node 14 wireless transceiver shall have this parameter set to 0.

When a seismic array is deployed, as in Fig. 1, on being powered up, a RAU 10 enables its upstream transceiver 26 and seeks to establish communication with a root node 14 by searching for a beacon signal with a logical distance parameter of 0. On detecting the beacon, the transceiver associates with the root node and is enabled as a wireless client of the network. The downstream transceiver 28 of the same RAU 10 is enabled as an access point using a different wireless frequency, and broadcasts a beacon with the logical distance parameter set to 1, identifying the RAU as a relay node.

If the upstream transceiver 26 cannot establish communications with a root node 14, it then searches for a beacon signal broadcast by a relay node. If multiple beacons are detected, the upstream transceiver 26 will preferentially connect to an access point broadcasting a beacon containing the lowest logical distance. If the lowest logical distance is detected from multiple beacons, preference is give to the one which is evaluated to have the best communications path based on a set of metrics, including, but not limited to, received signal strength, packet error rate and link data rate. On detecting an appropriate beacon, the transceiver associates with the access point transmitting the beacon and is enabled as a wireless client of the network. The downstream transceiver 28 of the same RAU 10 is then enabled as an access point using a different wireless frequency, and broadcasts a beacon with the logical distance parameter set to a value of 1 greater than that contained in the beacon detected by the upstream transceiver 26.

It will be appreciated that as the system is brought into use, the RAUs will adaptively form a network with optimum efficiency. It is preferred that the evaluation carried out by the RAUs is repeated at intervals during use of the system to take account of changes in signal propagation and environmental factors.

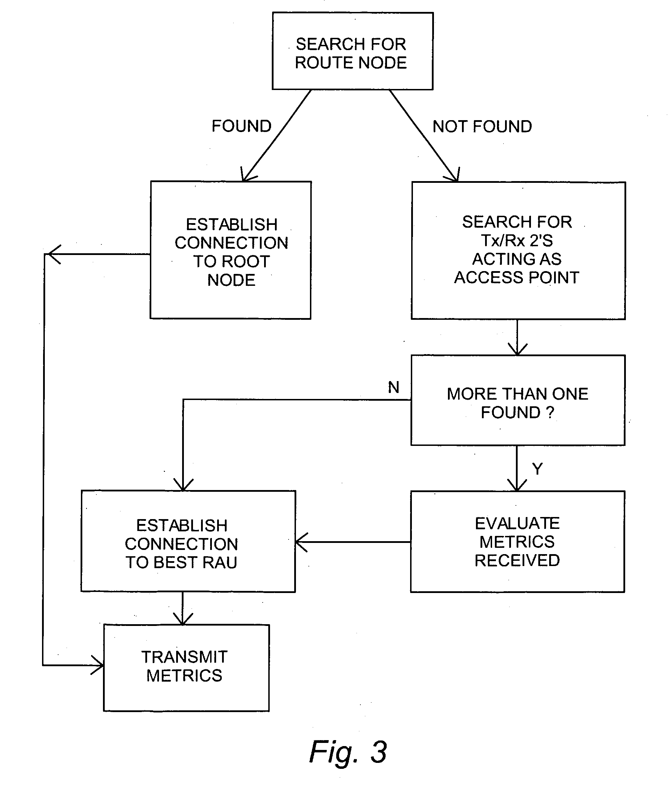

Fig. 3 illustrates in flow chart form the process of evaluating and association carried out within an RAU.

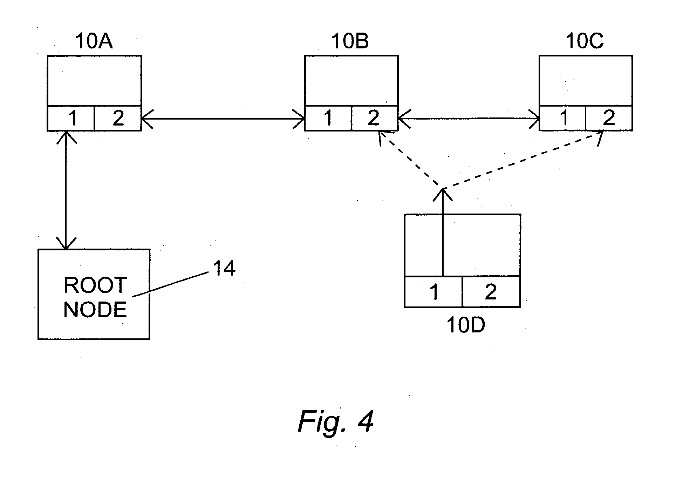

Fig. 4 shows a very small part of the network to illustrate connections which may be made. RAU 10A is able to communicate directly with root node 14. RAU 10B cannot communicate directly with root node 14, and establishes communication via RAU 10A. RAU 10C communicates via 10A and 10B. RAU 10D can communicate with either of 10B and 10C and will select the route which is most efficient on the basis of the metrics received. This would most likely be via 10B as requiring the fewest hops, but could be via 10C if the channel from 10D directly to 10B is of poor quality.

In the network formed in this way the operation of each RAU is analogous to that of an Ethernet switch on a copper Ethernet network. Each RAU has an associated IP address and the central control unit 12 maintains a routing table. Once the network has been established, the routing table is relatively static.

The system is similar in topography to a wireless mesh network, but is significantly different in operation. In a conventional wireless mesh network there is a single transmitter/receiver in each unit. While one unit is transmitting other units on the same route are limited to receiving. The effect is that as the mesh grows there is increasing latency and the effective bandwidth is greatly reduced. In the present system, by using two transceivers per unit there is a small degree of latency and effectively zero (or very small) reduction in bandwidth as the system grows.

Although described with particular reference to land seismic surveying, the invention is equally applicable to other uses where large quantities of data must be collated from a large number of dispersed locations.

## Claims

1. A data transmission system for transmitting digital data between a central control unit and a multiplicity of remote stations via one or more root nodes; each of the remote stations comprising a first transceiver, a second transceiver and a control means; the first transceiver being operable as a wireless client communicating with an access point; and the second transceiver being operable as an access point for other remote stations.

2. The system of claim 1, in which the first transceiver of any given remote station communicates selectively with, as access point, a root node where one is available to it or otherwise the second transceiver of another remote station.

3. The system of claim 2, in which a remote station which fails to establish communication with a root node selects another remote station as access point on the basis of the lowest logical distance to the CCU and a set of transmission channel metrics.

4. The system of any preceding claim, in which the central control unit is connected to a plurality of root nodes via a fast Ethernet or gigabit Ethernet network.

5. A seismic survey system comprising a data transmission system in accordance with any preceding claim, and in which each of the remote stations is a remote acquisition unit connected to one or more geophones to form a geophone group.

6. A remote station for use in the system of any preceding claim, comprising a first transceiver, a second transceiver and control means; the control means being operable to cause the first transceiver to establish communication with an access point and thereafter to cause the second transceiver to act as an access point.

7. A remote station as claimed in claim 6, in which the control means seeks to establish communication between the first transceiver and a root node, failing which it causes the first transceiver to establish communication with the second transceiver of another remote station.

8. A remote station as claimed in claim 7, in which the control means selects between more than one other remote stations available to it on the basis of transmission channel metrics and the logical distance between the other remote stations and the CCU.

9. A remote acquisition unit for use in seismic surveying comprising a remote station as claimed in any of claim 6 to 8, input means for connection to one or more geophones, and means for storing and forwarding seismic data received from said geophone(s).
